**Europäisches Patentamt**

**European Patent Office**

**Office européen des brevets**

(19)

(11) Veröffentlichungsnummer : **0 276 770 B2**

## (12) NEUE EUROPÄISCHE PATENTSCHRIFT

(45) Veröffentlichungstag der neuen Patentschrift :
**15.06.94 Patentblatt 94/24**

(51) Int. Cl.⁵ : **D21H 19/24**

(21) Anmeldenummer : **88100893.2**

(22) Anmeldetag : **22.01.88**

(54) **Leimungsmittel für Papier auf Basis feinteiliger wässriger Dispersionen.**

(30) Priorität : **30.01.87 DE 3702712**

(43) Veröffentlichungstag der Anmeldung :
**03.08.88 Patentblatt 88/31**

(45) Bekanntmachung des Hinweises auf die
Patenterteilung :
**14.08.91 Patentblatt 91/33**

(45) Bekanntmachung des Hinweises auf die
Entscheidung über den Einspruch :
**15.06.94 Patentblatt 94/24**

(84) Benannte Vertragsstaaten :
**AT BE CH DE ES FR GB IT LI NL SE**

(56) Entgegenhaltungen :
**EP-A- 0 058 313**
**EP-A- 0 134 449**
**EP-A- 0 150 003**
**EP-A- 0 257 412**
**DE-A- 2 163 850**
**DE-B- 2 234 908**

(56) Entgegenhaltungen :
**US-A- 3 061 471**
**US-A- 3 061 472**
**US-A- 3 785 921**
**US-A- 4 301 017**
**Derwent-Referat Nr. 15-126 der JP-A-52/5305**
**Derwent-Referat Nr. 80016 der JP-A-55/125101**
**Indian Pulp & Paper, Okt./Nov. 1978, Seiten**
**5-14**

(73) Patentinhaber : **BASF Aktiengesellschaft**
**Carl-Bosch-Strasse 38**
**D-67063 Ludwigshafen (DE)**

(72) Erfinder : **Degen, Hans-Juergen, Dr.**
**Heinrich-v.-Gagern-Strasse 11**
**D-6143 Lorsch (DE)**
Erfinder : **Reichel, Fritz, Dr.**
**Holunderweg 3**
**D-6945 Hirschberg (DE)**
Erfinder : **Riebeling, Ulrich, Dr.**
**Goerlitzer Strasse 39**
**D-6707 Schifferstadt (DE)**
Erfinder : **Hoehr, Lothar, Dr.**
**Giselherstrasse 14**
**D-6520 Worms 1 (DE)**

Jouve, 18, rue Saint-Denis, 75001 PARIS

## Beschreibung

Aus der US-A- 3 061 471 ist bekannt. Acrylsäureester, die sich von Alkoholen mit 2 bis 4 Kohlenstoffatomen ableiten, in Gegenwart von Radikale bildenden Polymerisationsinitiatoren in einer wäßrigen Lösung von Stärke zu polymerisieren. Man erhält stabile wäßrige Dispersionen, die als Schlichtemittel verwendet werden. Gemäß der US-A- 3 061 472 erfolgt die Polymerisation von Acrylsäureestern, die sich von Alkoholen mit 2 bis 4 Kohlenstoffatomen ableiten, in wäßrigen Lösungen von Stärke noch zusätzlich in Gegenwart eines nichtionischen oberflächenaktiven Mittels. Auch die so erhaltenen wäßrigen Dispersionen werden als Schlichtemittel verwendet.

Aus der US-A- 4 301 017 ist eine stabile wäßrige Polymerdispersion bekannt, die durch Copolymerisieren von mindestens einem Vinylmonomer in einer wäßrigen Lösung einer derivatisierten und verdünnten Stärke erhalten wird. Die dabei eingesetzte Stärke hat einen Substitutionsgrad von wenigstens 0,05 und eine Intrinsic-Viskosität von nicht weniger als 0,12 dl/g. Die so erhaltenen Polymerdispersionen werden als Schlichtemittel und Beschichtungsmittel verwendet. Nach dem aus der EP-A- 134 449 bekannten Verfahren werden wäßrige Polymerdispersionen durch Polymerisation ethylenisch ungesättigter Verbindungen in wäßrigem Medium in Gegenwart von mindestens 0,6 Gew. %, bezogen auf das Gesamtgewicht der Monomeren, einer wasserlöslichen Stärke bzw. einer abgebauten Stärke unter Verwendung von mindestens 30 mmol, je kg der Monomeren, Wasserstoffperoxid, Ketonperoxiden und/oder organischen Hydroperoxiden sowie Redoxkatalysatoren bei Temperaturen von 10 bis 100°C polymerisiert. Die so erhältlichen Polymerdispersionen werden zur Herstellung von Klebstoffen, als Farb-, Textil- oder Papierhilfsmittel oder in hydraulisch abbindenden Massen verwendet. Die Dispersionen besitzen jedoch nur eine schlechte Leimungswirkung für Papier.

Aus der JP-A- 58/115 196 ist ein Papierhilfsmittel bekannt, das die Festigkeit von Papier erhöht und gleichzeitig das Papier leimt. Das Papierhilfsmittel beruht auf einer Dispersion eines Pfropfcopolymerisates von Styrol mit Alkylacrylaten auf Stärke. Die Pfropfcopolymerisate werden erhalten, indem man Styrol und einen Acrylester, z.B. n-Butylacrylat, in wäßrigem Medium, das Stärke gelöst enthält, bei Temperaturen von 20 bis 100°C unter Bildung einer wäßrigen Dispersion polymerisiert. Die mit Hilfe dieser Dispersionen erzielbaren Leimungseffekte auf Papier sind noch verbesserungsbedürftig.

In der älteren, nicht vorveröffentlichen EP-A- 0257412 werden Leimungsmittel für Papier auf Basis feinteiliger, wäßriger Dispersionen von Copolymerisaten beschrieben, die durch Copolymerisieren von 10 bis 56 Gewichtsteilen einer Monomermischung aus

(a) 20 bis 65 Gew.% Acrylnitril und/oder Methacrylnitril,
(b) 80 bis 35 Gew.% eines Acrylsäureesters eines einwertigen, gesättigten $C_3$- bis $C_8$-Alkohols und
(c) 0 bis 10 Gew.% anderen ethylenisch ungesättigten copolymerisierbaren Monomeren,

wobei die Summe der Gewichtsprozente (a), (b) und (c) immer 100 beträgt, nach Art einer Emulsionspolymerisation in 100 Gewichtsteilen einer wäßrigen Lösung, die 1,5 bis 25 Gew.% einer abgebauten Stärke mit einer Viskosität $\eta_i = 0,12$ bis 0,50 dl/g gelöst enthält, bei Temperaturen von 40 bis 100°C in Gegenwart eines Peroxidgruppen enthaltenden Initiators erhältlich sind.

EP-A-0058313 bzw. das nur geringfügig abweichende Dokument EP-A-0150003 offenbaren kationische Leimungsmittel für Papier auf der Basis von wässrigen Dispersionen von Copolymerisaten aus Acrylnitril und/oder Methacrylnitril und Acrylsäure-$C_{1-12}$-Alkylestern, die in Gegenwart von quaternierten Terpolymeren aus N,N-Dimethylaminoethyl(meth)acrylat, Styrol und Acrylnitril polymerisiert wurden. Aus den Reaktionsbedingungen der radikalischen Polymerisation mit Wasserstoffperoxid-haltigen Initiatoren ist zu schließen, daß es sich bei den Reaktionsprodukten zumindest teilweise um Pfropfpolymere handelt, bei denen die Monomeren auf den Terpolymeren aufgepfropft sind, was auf Seite 11, Absatz 2 von EP-A-0058313 auch ausdrücklich bestätigt wird. Diese bekannten Leimungsmittel sind aufgrund ihren Gehaltes an Terpolymeren relativ tener.

Der Erfindung liegt die Aufgabe zugrunde, ein gegenüber dem Stand der Technik in wirtschaftlicher Hinsicht verbessertes Leimungsmittel für Papier auf Basis feinteiliger wäßriger Dispersionen von Pfropf-Copolymerisaten zur Verfügung zu stellen.

Die Aufgabe wird erfindungsgemäß dadurch gelöst, daß man 40 bis 140 Gewichtsteile einer Monomermischung aus

(a) 20 bis 65 Gew.% Acrylnitril und/oder Methacrylnitril,
(b) 80 bis 35 Gew.% eines Acrylsäureesters eines einwertigen, gesättigten $C_3$- bis $C_8$-Alkohols und
(c) 0 bis 10 Gew.% anderen ethylenisch ungesättigten copolymerisierbaren Monomeren,

wobei die Summe der Gewichtsprozente (a), (b) und (c) immer 100 beträgt, in 100 Gewichtsteilen einer wäßrigen Lösung, die 2,7 bis 15 Gew.% einer abgebauten Stärke mit einer Viskosität $\eta_i = 0,04$ bis weniger als 0,12 dl/g gelöst enthält, bei Temperaturen von 40 bis 100°C in Gegenwart von Wasserstoffperoxid, Kombinationen von Wasserstoffperoxid mit einem Schwermetallsalz, Redoxsystemen aus Wasserstoffperoxid mit einem Re-

2

duktionsmittel oder Redoxsystemen aus Wasserstoffperoxid, einem Reduktionsmittel und zusätzlich einer geringen Menge eines Schwermetallsalzes als Initiator copolymerisiert.

Zur Herstellung der Leimungsmitteldispersionen verwendet man als Monomere der Gruppe (a) Acrylnitril oder Methacrylnitril oder auch Mischungen aus Acrylnitril und Methacrylnitril. Bezogen auf die Summe der gesamten, bei der Polymerisation eingesetzten Monomeren werden die Monomeren der Gruppe (a) zu 20 bis 65, vorzugsweise 25 bis 62 Gew.% verwendet.

Als Monomere der Gruppe (b) kommen Acrylsäureester in Betracht, die sich von einwertigen, gesättigten $C_3$- bis $C_8$-Alkoholen ableiten. Geeignete Ester dieser Art sind beispielsweise n-Propylacrylat, Isopropylacrylat, n-Butylacrylat, Isobutylacrylat, tert.-Butylacrylat, Neopentylacrylat, n-Hexylacrylat, Cyclohexyl-acrylat und 2-Ethylhexylacrylat. Vorzugsweise verwendet man aus der Gruppe (b) die Butylester der Acrylsäure und hiervon insbesondere n-Butylacrylat und Isobutylacrylat oder Mischungen aus n-Butylacrylat und Isobutylacrylat sowie Mischungen aus n-Butylacrylat und tert.-Butylacrylat und Mischungen aus Isobutylacrylat und tert.-Butylacrylat in jedem beliebigen Verhältnis. Die Monomeren der Gruppe (b) werden, bezogen auf die Summe der bei der Copolymerisation eingesetzten Monomeren, zu 35 bis 80, vorzugsweise 38 bis 75 Gew.% eingesetzt. Die Copolymerisation kann außerdem in Gegenwart von Monomeren der Gruppe (c) vorgenommen werden, die gegebenenfalls zur Modifizierung der Copolymerisate aus (a) und (b) verwendet werden. Als Monomere der Gruppe (c) werden 0 bis 10 Gew.% andere ethylenisch ungesättigte copolymerisierbare Monomere eingesetzt, die nicht unter die Definition der Monomeren gemäß (a) und (b) fallen. Die Summe der Gewichtsprozente von (a), (b) und (c) beträgt immer 100. Als Monomere der Gruppe (c) können beispielsweise ethylenisch ungesättigte $C_3$- bis $C_5$-Carbonsäuren, wie Acrylsäure, Methacrylsäure, Maleinsäure, Fumarsäure, Itaconsäure und Maleinsäurehalbester eingesetzt werden. Zu dieser Gruppe von Monomeren gehören auch Vinylsulfonat und 2-Acrylamidopropansulfonsäure bzw. deren Alkalisalze. Die ethylenisch ungesättigten Carbonsäuren können vollständig mit Natronlauge, Kalilauge, Ammoniak und/oder Aminen neutralisiert sein oder auch nur partiell, z.B. zu 10 bis 80 %.

Eine weitere Modifizierungsmöglichkeit der Copolymerisate aus den Monomeren (a) und (b) ergibt sich dadurch, daß man als Monomere (c) basische Verbindungen einpolymerisiert, z.B. Di-$C_1$- bis $C_3$-Alkylamino-$C_2$-bis $C_6$-Alkylacrylate sowie die entsprechenden Methacrylate, N-Vinylimidazolin und/oder N-Vinyl-2-methylimidazolin. Von den basischen Acrylaten verwendet man vorzugsweise Dimethylaminoethylmethacrylat, Dimethylaminoethylacrylat und Diethylaminoethylacrylat. Die basischen Acrylate werden bei der Copolymerisation in Form der Salze mit anorganischen Säuren, wie Salzsäure oder Schwefelsäure, oder der organischen Säuren z.B. Ameisensäure, Essigsäure und Propionsäure, sowie in quaternisierter Form eingesetzt. Als Quaternisierungsmittel eignen sich vor allem Methylchlorid, Dimethylsulfat, Diethylsulfat, Ethylchlorid und Benzylchlorid. Die Modifizierung der Copolymerisate aus den Komponenten (a) und (b) mit basischen Acrylaten oder N-Vinylimidazolinen bewirkt, daß die in dieser Weise modifizierten feinteiligen Copolymerisat-Dispersionen aus den Monomeren (a) und (b) besser auf die Fasern aufziehen, als nichtmodifizierte Copolymerisat-Dispersionen.

Eine weitere Modifizierungsmöglichkeit besteht darin, daß man die Monomeren (a) und (b) in Gegenwart von nichtionischen Monomeren copolymerisiert, wobei zur dieser Gruppe von Monomeren (c) Styrol, Acrylamid, Methacrylamid, Methacrylsäureester, die sich von $C_1$- bis $C_{18}$-Alkoholen ableiten und/oder Acrylsäureester zu verstehen sind, die von den Acrylestern (b) verschieden sind, z.B. Methylacrylat, Ethylacrylat, Decylacrylat, Palmitylacrylat und/oder Stearylacrylat. Von den nichtionischen Monomeren der Gruppe (c) haben insbesondere Styrol, Acrylamid und Methacrylamid besondere Bedeutung. Die Monomeren der Gruppe (c) können, ebenso wie die Monomeren der anderen Gruppen, allein oder in Mischung untereinander mit den Monomeren (a) und (b) copolymerisiert werden.

Besonders wirksame Leimungsmittel erhält man, wenn man eine Monomermischung aus Acrylnitril und mindestens einem Butylacrylat, vorzugsweise aus 25 bis 62 Gew.% Acrylnitril und 75 bis 38 Gew.% n-Butylacrylat oder einer Mischung von Butylacrylaten, in einer wäßrigen Lösung einer abgebauten Stärke mit einer Viskosität $\eta_i$ = 0,04 bis weniger als 0,12 dl/g in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmittel und zusätzlich einer geringen Menge eines Schwermetallsalzes als Initiator copolymerisiert.

Die Copolymerisation der Monomeren (a) bis (c) erfolgt nach Art einer Emulsionspolymerisation in wäßrigem Medium in Gegenwart von abgebauten Stärken mit einer Viskosität $\eta_i$ von 0,04 bis weniger als 0,12 dl/g, vorzugsweise 0,045 bis 0,11 dl/g. Stärken, die diese Viskosität haben, sind bereits einen oxidativen, thermischen, acidolytischen oder einem enzymatischen Abbau unterworfen worden. Für diesen Abbau können native Stärken, wie Kartoffel-, Weizen-, Reis-, Tapioka- und Maisstärke, eingesetzt werden. Außerdem können chemisch modifizierte Stärken, wie Hydroxyethyl-, Hydroxypropyl- oder quaternisierte Aminoalkylgruppen enthaltende Stärken auf eine Viskositär $\eta_i$ von 0,04 bis weniger als 0,12 dl/g abgebaut werden. Vorzugsweise ver-

3

wendet man oxidativ abgebaute Kartoffelstärke, kationisierte, abgebaute Kartoffelstärke oder Hydroxyethylstärke, insbesondere solche mit einer Viskosität $\eta_i$ von 0,045 bis 0,11 dl/g.

Die Viskosität $\eta_i$ - auch "Intrinsic-Viskosität genannt - von Stärke wird aus der relativen Viskosität $\eta_{rel}$ ge-mäß folgender Gleichung

$$\eta_i = (2{,}303 \times \log \eta_{rel})/\text{Konzentration}$$

errechnet. Die Konzentration wird dabei in g/100 ml angegeben. Die relative Viskosität der aufgeschlossenen Stärkelösungen wird mit Hilfe eines Kapillar-Viskosimeters aus der Viskosität der Lösung bei 25°C bestimmt, wobei man die relative Viskosität aus den korrigierten Durchlaufzeiten für Lösungsmittel $t_0$ und Lösung $t_1$ ge-mäß folgender Gleichung

$$\eta_{rel} = t_1/t_0$$

errechnet. Die Umrechnung auf $\eta_i$ erfolgt nach der oben angegebenen Beziehung aufgrund der Angaben in "Methods in Carbohydrate Chemistry", Volume IV, Starch, Academic Press, New York and London, 1964, Seite 127.

Zur Herstellung der feinteiligen Copolymerisat-Dispersionen bereitet man zunächst eine wäßrige Lösung, die 2,7 bis 15, vorzugsweise 3 bis 12 Gew.% einer abgebauten Stärke mit einer Viskosität $\eta_i$ von 0,04 bis weniger als 0,12 dl/g gelöst enthält. Man kann auch Mischungen aus Stärken einer unterschiedlichen Viskosität $\eta_i$ als Schutzkolloid einsetzen, jedoch muß die Viskosität der Mischung im angegebenen $\eta_i$- Bereich von 0,04 bis weniger als 0,12 dl/g liegen, d.h. es können in diesem Fall auch Stärken eingesetzt werden, deren Viskosität außerhalb des Bereichs liegt. Pro 100 Gewichtsteile einer solchen wäßrigen Stärkelösung unterwirft man 40 bis 140 Gewichtsteile einer Monomermischung aus den Komponenten (a) bis (c) der Copolymerisation. Die Monomeren können entweder in Form einer Mischung oder getrennt voneinander in die wäßrige Lösung der abgebauten Stärke einemulgiert werden. Um die Emulsion zu stabilisieren, kann man der wäßrigen Stärkelösung eine geringe Menge eines Emulgators zusetzen. Man kann jedoch auch die Monomeren mit Hilfe eines Emulgators zunächst in Wasser emulgieren und sie dann in Form der Emulsion zur wäßrigen Stärkelösung zugeben. Als Emulgatoren kommen hierfür Produkte mit anionischem oder kationischem Charakter in Betracht. Solche Emulgatoren sind beispielsweise Natriumalkylsolfonat, Natriumlaurylsulfat, Natriumdodecylbenzolsulfonat oder Dimethylalkylbenzylammoniumchlorid. Es ist empfehlenswert, bei anionischen Stärken anionische Emulgatoren, bei kationischen Stärken kationische Emulgatoren einzusetzen. Die Menge an Emulgator, die gegebenenfalls mitverwendet wird, beträgt 0 bis 0,3, vorzugsweise 0,05 bis 0,2 Gew.%, bezogen auf die Summe der eingesetzten Monomeren (a) bis (c). Vorzugsweise wird die Emulsionspolymerisation jedoch in Abwesenheit eines Emulgators durchgeführt, weil Emulgatoren in aller Regel die Leimung verschlechtern und bei der Handhabung der Leimungsmittel bzw. bei der Anwendung der Leimungsmittel oft Anlaß zu einer starken Schaumentwicklung geben. Das Molgewicht des Copolymerisats kann auf Wunsch durch Zusatz von Molgewichtsreglern (Überträgern) wie z.B. Dodecylmerkaptan, 2-Merkaptobenzothiazol, Bromtrichlormethan usw. gesenkt werden.

Die copolymerisation der Monomeren in der wäßrigen Lösung der abgebauten Stärke wird bei Temperaturen von 40 bis 100, vorzugsweise 50 bis 100° C in Gegenwart von Wasserstoffperoxid, Kombinationen von Wasserstoffperoxid mit einem Schwermetallsalz, z.B. Eisen-II-sulfat oder ein Redoxsystem aus Wasserstoffperoxid mit einem geeigneten Reduktionsmittel, wie Natriumformaldehydsulfoxylat, Ascorbinsäure, Natriumdisulfit und/oder Natriumdithionit oder ein Redoxsystem aus Wasserstoffperoxid, einem Reduktionsmittel oder einer Mischung der genannten Reduktionsmittel und zusätzlich eine geringe Menge eines Schwermetallsalzes, wie beispielsweise Eisen-II-sulfat in Betracht.

Während der Polymerisation ist für eine gute Durchmischung der Komponenten zu sorgen. So wird das Reaktionsgemisch vorzugsweise während der gesamten Dauer der Polymerisation und einer sich gegebenenfalls daran anschließenden Nachpolymerisation zur Erniedrigung des Restmonomerengehaltes gerührt. Die Polymerisation wird unter Ausschluß von Sauerstoff in einer Inertgasatmosphäre, z.B. unter Stickstoff, durchgeführt. Um die Polymerisation zu starten, entfernt man zunächst den Sauerstoff aus der wäßrigen Lösung der Stärke sowie aus den Monomeren und gibt zunächst 1 bis 40 % der zu polymerisierenden Monomeren zu der wäßrigen Lösung der Stärke und emulgiert durch Rühren der Reaktionsmischung die Monomeren darin. Durch vorhergehende, gleichzeitige oder nachträgliche Zugabe einer wäßrigen Initiatorlösung beginnt - in aller Regel nach einer kurzen Induktionsperiode - die Polymerisation. Dabei kann die zu Beginn der Polymerisation entstehende Polymerisationswärme dazu verwendet werden, um das Reaktionsgemisch zu erwärmen. Die Temperatur kann dabei bis auf 90°C ansteigen. Sobald die vorgelegten Monomeren polymerisiert sind, wird der Rest der Monomeren und der Initiatorlösung kontinuierlich oder portionsweise zugefügt und unter Rühren polymerisiert. Die Dosierung der Monomeren kann jedoch auch vom Start der Polymerisation an kontinuierlich vorgenommen werden. Man erhält eine feinteilige, wäßrige Dispersion, bei der die Copolymerisatteilchen von einer Schutzkolloidhülle auf Basis einer abgebauten Stärke umgeben sind. Ein Maß für die Feinteiligkeit der Dispersion ist der LD-Wert (Lichtdurchlässigkeitswert der Dispersion). Der LD-Wert wird gemessen, indem man die Dispersion in 0,01 gew.%iger wäßriger Lösung in einer Küvette einer Kantenlänge von 2,5 cm mit Licht der Wellenlänge 546 nm vermißt und mit der Durchlässigkeit von Wasser unter den vorstehend genannten Bedingungen vergleicht. Die Durchlässigkeit von Wasser wird dabei mit 100 % angegeben. Je feinteiliger die Dispersion ist, desto höher ist der LD-Wert, der nach der oben beschriebenen Methode gemessen wird.

Die mittlere Teilchengröße der Copolymerisatteilchen ohne die Schutzkolloidhülle aus abgebauter Stärke kann ermittelt werden, wenn man die Stärkehülle der Latexteilchen praktisch vollständig enzymatisch abbaut. Eine mögliche Koagulation der Copolymerisat-Dispersion kann dabei durch Zusatz eines geeigneten Emulgators verhindert werden. Nach dem enzymatischen Abbau kann dann die Teilchengröße der Copolymerisatdispersion mit handelsüblichen Geräten gemessen werden, z.B. mit Hilfe des Nanosizers der Firma Coulter Electronics. Der mittlere Durchmesser der Copolymerisatteilchen ohne die Schutzkolloidhülle beträgt 75 bis 200 nm.

Die oben beschriebenen feinteiligen wäßrigen Dispersionen von Copolymerisaten werden als Masse- und Oberflächenleimungsmittel für Papier verwendet. Der Feststoffgehalt der oben beschriebenen wäßrigen Copolymerisatdispersionen beträgt 35 bis 63, vorzugsweise 38 bis 60 Gew.%. Bei der Oberflächenleimung von Papier wird die Copolymerisatdispersion durch Zugabe von Wasser auf eine Gesamtpolymerisatkonzentration eingestellt, die für Präparationslösungen zum Leimen von Papier allgemein üblich ist, z.B. auf einen Polymerisatgehalt von 0,05 bis 3,0 Gew.%. Die Menge an Copolymerisat, die auf das Papier für Leimungszwecke aufgebracht wird, liegt in der Regel zwischen 0,02 und 1,5, vorzugsweise zwischen 0,3 und 0,8 Gew.%, bezogen auf trockenen Faserstoff. Zur Herstellung der Präparationslösungen werden die Dispersionen, deren Feststoffgehalt 35 bis 63 Gew.% beträgt, mit Wasser verdünnt. Die Präparationslösungen können außerdem weitere Hilfsstoffe enthalten, z.B. native Stärke zur Erhöhung der Festigkeit des Papiers, Naß- und Trockenverfestigungsmittel auf Basis synthetischer Produkte, Farbstoffe und Wachsemulsionen.

Die Präparationslösungen werden in der Regel mit Hilfe einer Leimpresse auf die Oberfläche des Papiers aufgebracht. Es ist selbstverständlich auch möglich, die Präparationslösung durch Sprühen oder Tauchen oder z.B. mit Hilfe eines Wasserschabers auf die Papierbahnen aufzutragen. Das mit der Präparationslösung behandelte Papier wird anschließend heiß getrocknet. Die Leimung ist nach dem Trocknen der Papierbahn bereits voll ausgebildet. Beim Einsatz der feinteiligen Dispersion als Masseleimungsmittel erfolgt die Zugabe der Dispersion zum Papierstoff. Die für eine ausreichende Masseleimung notwendigen Mengen an Dispersionen entsprechen den Polymermengen, die auch für die Oberflächenleimung benötigt werden. Für die Masseleimung kommen insbesondere kationisch modifizierte feinteilige Dispersionen in Betracht.

Die in den Beispielen angegebenen Teile sind Gewichtsteile, die Prozentangaben beziehen sich ebenfalls auf das Gewicht der Stoffe. Der Leimungsgrad der Papier wurde mit Hilfe des Cobb-Wertes nach DIN 53 132 bestimmt. Für die Prüfung der Leimungswirkung der Copolymerisatdispersionen wurden zwei verschiedene Prüfpapiere verwendet. Sie hatten folgende Stoffzusammensetzung:

Prüfpapier A

50 %     gebleichter Sulfitzellstoff
50 %     gebleichter Sulfatzellstoff
30 %     Kreide, bezogen auf trockenen Zellstoff.
Herstellung des Papiers erfolgte bei pH 7.

Prüfpapier B

50 %     gebleichter Sulfitzellstoff
50 %     gebleichter Sulfatzellstoff
25 %     China Clay, bezogen auf trockenen Zellstoff
2 %     Alaun, bezogen auf trockenes Papier.

Beide Prüfpapiere waren in der Masse ungeleimt, hatten ein Flächengewicht von 70 g/m$^2$. Der Mahlgrad betrug 25° SR (Schopper-Riegler), der Aschegehalt 14 %. Die Präparationslösungen enthielten, wenn nicht anders angegeben, jeweils 2,5 g/l des Copolymerisates, bezogen auf den Feststoffgehalt der Dispersionen und 60 g/l einer oxidativ abgebauten Stärke mit einem $\eta_i$ von 0,36 dl/g. Die Flottenaufnahme lag in allen Fällen bei 90 %, bezogen auf trockenes Papier.

Die mittlere Teilchengröße der Copolymerisatdispersion wurde nach praktisch vollständigem enzymatischen Abbau der Schutzkolloidhülle mit Hilfe eines Nanosizers der Firma Coulter Electronics gemessen. Hierbei wurden 10 ml der Dispersion mit 30 ml Wasser verdünnt. Dann versetzte man 1 ml der so erhaltenen wäßrigen Lösung mit 0,03 g Zitronensäure und 0,2 g des Natriumsalzes des Schwefelsäurehalbesters des Reaktionsprodukts von 1 Mol Isooctylphenol mit 25 Mol Ethylenoxid. Nach Einstellung des pH-Wertes auf 5,0 durch Zugabe von verdünnter Ammoniaklösung gab man 3 ml einer 1 %igen wäßrigen, handelsüblichen Enzymlösung (α-Amylase B) zu und erhitzte die Mischung 1 Stunde auf eine Temperatur von 55°C. Die Probe wurde anschließend mit Wasser auf eine Konzentration von ~ 0,001 Gew.% verdünnt. Danach bestimmte man den Teilchendurchmesser im Nanosizer.

Chakterisierung der eingesetzten Stärken und Enzyme

| | $\eta_i$ dl/g | Substitutionsgrad Mol/Mol Glucoseeinheiten | Feststoff- gehalt % |
|---|---|---|---|
| Stärke I: oxidativ abgebaute Kartoffelstärke | 0,28 | 0,034 -COOH | 82 |
| Stärke II: abgebaute, kationische Kartoffelstärke | 0,47 | 0,015 -COOH 0,027 N | 83 |
| Stärke III: abgebaute, kationische Kartoffelstärke | 1,16 | 0,07 N | 83 |
| Stärke IV: Mischung aus 80 % Stärke II + 20 % Stärke III | 0,68 | 0,036 N | 83 |

α-Amylase A

α-Amylase A ist eine thermisch höher belastbare α-Amylase. Mit 16,7 mg 100 %iger α-Amylase A können in 7 bis 20 Minuten bei 37°C und einem pH-Wert von 5,6 und einem Calciumgehalt der Lösung von 0,0043 Mol/l 5,26 g Stärke "Amylum Solubile" der Firma Merck abgebaut werden. α-Amylase A hat bei 90°C und pH 6,5 ein Aktivitätsmaximum.

α-Amylase B

α-Amylase B hat bei 55°C und einem pH-Wert von 5,0 ein Aktivitätsmaximum. Mit 1,25 mg 100 %iger α-Amylase B können in 7 bis 20 Minuten bei 37°C und einem pH-Wert von 4,7 insgesamt 5,26 g Stärke "Amylum Solubile" der Firma Merck abgebaut werden.

Beispiel 1

In einem 1 l Vierhalskolben, der mit Rührer, Rückflußkühler, Dosiervorrichtung und einer Einrichtung zum Arbeiten unter Stickstoffatmosphäre ausgestattet ist, werden 36,5 g der Stärke I in 146 g Wasser suspendiert und unter Rühren auf 85°C erhitzt. Nach 30 Minuten bei 85°C werden 2,3 g einer wäßrigen 10 %igen Calciumacetatlösung und 15,4 g einer 1 %igen Enzymlösung (α-Amylase A) zugefügt. Nach weiteren 20 Minuten bei 85°C wird der enzymatische Stärkeabbau durch Zugabe von 7,5 g Eisessig abgestoppt. Die Intrinsic-Viskosität der Stärke beträgt nach der Behandlung 0,058 dl/g. Man fügt weiterhin noch 5,0 g einer 1 %igen wäßrigen Eisen(II)sulfatlösung und 1,33 g 30 %iges Wasserstoffperoxid zu. Bei 85°C gibt man dann eine Emulsion, bestehend aus 68,75 g Acrylnitril, 56,25 g n-Butylacrylat und eine Lösung von 1,85 g Natriumformaldehydsulfoxylat und 0,2 g Na-$C_{14}$-alkylsulfonat in 50 g Wasser, innerhalb von 1,5 Stunden und separat davon in 1,75 Stunden 50 g einer 2,35 %igen Wasserstoffperoxidlösung zu. Nachdem die Monomeren zudosiert sind, erhitzt man das Reaktionsgemisch noch weitere 60 Minuten unter Rühren auf 85°C. Man erhält eine Dispersion mit einem Feststoffgehalt von 42,4 % und einem LD-Wert von 84 (Teilchengröße ohne Stärkehülle 145 nm).

Beispiel 2

In einem 1 l Vierhalskolben, der mit Rührer, Rückflußkühler, Dosiervorrichtung und einer Einrichtung zum Arbeiten unter Stickstoffatmosphäre ausgestattet ist, werden 35,5 g der Stärke I in 150 g Wasser suspendiert und unter Rühren auf 85°C erhitzt. Nach 30 Minuten bei 85°C werden 2,3 g einer wäßrigen 10 %igen Calciumacetatlösung und 15,4 g einer 1 %igen Enzymlösung ($\alpha$-Amylase A) zugefügt. Nach weiteren 20 Minuten bei 85°C wird der enzymatische Stärkeabbau durch Zugabe von 7,5 g Eisessig abgestoppt. Die Intrinsic-Viskosität der Stärke beträgt nach der Behandlung 0,06 dl/g. Man fügt weiterhin noch 12 g einer 1 %igen wäßrigen Eisen(II)sulfatlösung und 2,38 g 30 %iges Wasserstoffperoxid zu. Bei 85°C gibt man dann eine Monomermischung von 123,75 g Acrylnitril und 101,25 g n-Butylacrylat innerhalb von 1,5 Stunden sowie separat davon eine Lösung von 0,22 g Natrium-$C_{14}$-alkylsulfonat als Emulgator und 2,04 g Wasserstoffperoxid in 47,7 g Wasser innerhalb von 1,75 Stunden zu. Nachdem die Monomeren zudosiert sind, erhitzt man das Reaktionsgemisch noch weitere 60 Minuten unter Rühren auf 85°C. Man erhält eine Dispersion mit einem Feststoffgehalt von 51,1 % und einem LD-Wert von 77 (Teilchengröße ohne Stärkenhülle 150 nm).

Beispiel 3

In einem 1 l Vierhalskolben, der mit Rührer, Rückflußkühler, Dosiervorrichtung und einer Einrichtung zum Arbeiten unter Stickstoffatmosphäre ausgestattet ist, werden 42,5 g der Stärke II in 142 g Wasser suspendiert und unter Rühren auf 85°C erhitzt. Nach 30 Minuten bei 85°C werden 2,6 g einer wäßrigen 10 %igen Calciumacetatlösung und 13,5 g einer 1 %igen Enzymlösung ($\alpha$-Amylase A) zugefügt. Nach weiteren 20 Minuten bei 85°C wird der enzymatische Stärkeabbau durch Zugabe von 7,5 g Eisessig abgestoppt. Anschließend werden 9 g einer 1 %igen Eisen(II)sulfatlösung und 1,75 g 30 %iges Wasserstoffperoxid zugesetzt. Nach 15 Minuten ist das Wasserstoffperoxid zersetzt und der oxidative Stärkeabbau beendet. Die Intrinsic-Viskosität der Stärkemischung beträgt dann 0,045 dl/g. Dann gibt man 1,8 g 30 %iges Wasserstoffperoxid zu und beginnt sofort, eine Emulsion, die aus 93,7 g Acrylnitril, 76,4 g n-Butylacrylat und einer Lösung von 2,5 g Natriumformaldehydsulfoxylat und 0,2 g Na-$C_{14}$-alkylsulfonat in 60 g Wasser besteht, gleichmäßig innerhalb von 1,5 Stunden sowie gleichzeitig damit separat 50 g einer 3,12 %igen Wasserstoffperoxidlösung innerhalb von 1,75 Stunden zuzufügen. Während dieser Zeit und noch 60 Minuten nach dem Ende der Dosierung der Wasserstoffperoxidlösung wird die Temperatur des Reaktionsgemisches auf 85°C gehalten. Man erhält eine Dispersion mit einem Feststoffgehalt von 42,2 % und einem LD-Wert von 80 (Teilchendurchmesser ohne Stärkehülle 144 nm).

Beispiel 4

In einem 1 l Vierhalskolben, der mit Rührer, Rückflußkühler, Dosiervorrichtung und einer Einrichtung zum Arbeiten unter Stickstoffatmosphäre ausgestattet ist, werden 42,4 g Stärke IV in 142 g Wasser suspendiert und unter Rühren auf 85°C erhitzt. Nach 30 Minuten bei 85°C werden 2,6 g einer wäßrigen 10 %igen Calciumacetatlösung und 17,9 g einer 1 %igen Enzymlösung ($\alpha$-Amylase A) zugefügt. Nach weiteren 20 Minuten bei 85°C wird der enzymatische Stärkeabbau durch Zugabe von 7,5 g Eisessig abgestoppt. Anschließend werden 9 g einer 1 %igen Eisen(II)sulfatlösung und 1,75 g 30 %iges Wasserstoffperoxid zugesetzt. Nach 15 Minuten ist das Wasserstoffperoxid zersetzt und der oxidative Stärkeabbau beendet. Die Intrinsic-Viskosität der Stärkemischung beträgt dann 0,052 dl/g. Dann gibt man 1,8 g 30 %iges Wasserstoffperoxid zu und beginnt sofort, eine Emulsion, die aus 93,7 g Acrylnitril, 76,4 g n-Butylacrylat und einer Lösung von 2,5 g Natriumformaldehydsulfoxylat und 0,2 g Na-$C_{14}$-alkylsulfonat in 60 g Wasser besteht, gleichmäßig innerhalb von 1,5 Stunden und gleichzeitig separat davon 50 g einer 3,12 %igen Wasserstoffperoxidlösung innerhalb von 1,75 Stunden zuzufügen. Während dieser Zeit sowie noch 60 Minuten nach dem Ende der Monomerdosierung wird die Temperatur des Reaktionsgemisches auf 85°C gehalten. Man erhält eine Dispersion mit einem Feststoffgehalt von 41,5 % und einem LD-Wert von 81 (Teilchendurchmesser ohne Stärkehülle 138 nm).

Beispiel 5

In einem 1 l Vierhalskolben, der mit Rührer, Rückflußkühler, Dosiervorrichtung und einer Einrichtung zum Arbeiten unter Stickstoffatmosphäre ausgestattet ist, werden 34,0 g Stärke II sowie 8,4 g Stärke III in 148 g Wasser suspendiert und unter Rühren auf 85°C erhitzt. Nach 30 Minuten bei 85°C werden 2,6 g einer wäßrigen 10 %igen Calciumacetatlösung und 10 g einer 1 %igen Enzymlösung ($\alpha$-Amylase A) zugefügt. Nach weiteren 20 Minuten bei 85°C wird der enzymatische Stärkeabbau durch Zugabe von 7,5 g Eisessig abgestoppt. Anschließend werden 16,5 g einer 1 %igen Eisen(II)sulfatlösung und 1,75 g 30 %iges Waserstoffperoxid zugesetzt. Nach 20 Minuten ist das Wasserstoffperoxid zersetzt und der oxidative Stärkeabbau beendet. Die Intrinsic-Viskosität der Stärkemischung beträgt dann 0,08 dl/g. Dann gibt man 1,8 g 30 %iges Wasserstoffperoxid zu und beginnt sofort damit, eine Emulsion, die aus 93,7 g Acrylnitril, 76,4 g n-butylacrylat und einer Lösung von 0,2 g Na-$C_{14}$-alkylsulfonat in 50 g Wasser besteht, gleichmäßig innerhalb von 1 Stunde sowie gleichzeitig separat davon 50 g einer 3,12 %igen Wasserstoffperoxidlösung innerhalb von 1,75 Stunden zuzufügen. Während dieser Zeit und noch 60 Minuten nach dem Ende der Monomerdosierung wird die Temperatur des Reaktionsgemisches auf 85°C gehalten. Man erhält eine Dispersion mit einem Feststoffgehalt von 41,0 % und einem LD-Wert von 80 (Teilchendurchmesser ohne Stärkehülle 143 nm).

Beispiel 6

In einem 1 l Vierhalskolben, der mit Rührer, Rückflußkühler, Dosiervorrichtung und einer Einrichtung zum Arbeiten unter Stickstoffatmosphäre ausgestattet ist, werden 34,0 g der Stärke II sowie 8,4g der Stärke III in 135 g Wasser suspendiert und unter Rühren auf 85°C erhitzt. Nach 30 Minuten bei 85°C werden 2,6 g einer wäßrigen 10 %igen Calciumacetatlösung und 17,9 g einer 1 %igen Enzymlösung ($\alpha$-Amylase A) zugefügt. Nach weiteren 20 Minuten bei 85°C wird der enzymatische Stärkeabbau durch Zugabe von 7,5 g Eisessig abgestoppt. Anschließend werden 16,5 g einer 1 %igen Eisen(II)sulfatlösung und 1,75 g 30 %iges Wasserstoffperoxid zugesetzt. Nach 20 Minuten ist das Wasserstoffperoxid zersetzt und der oxidative Stärkeabbau beendet. Die Intrinsic-Viskosität der Stärkemischung beträgt dann 0,07 dl/g. Dann gibt man 1,8 g 30 %iges Wasserstoffperoxid zu und beginnt sofort damit, eine Emulsion, die aus 76,6 g Acrylnitril, 68 g n-Butylacrylat, 25,5 g t-Butylacrylat und einer Lösung von 2,5 g Natriumformaldehydsulfoxylat und 0,2 g Na-$C_{14}$-alkylsulfonat in 60 g Wasser besteht, gleichmäßig innerhalb von 1,5 Stunden und gleichzeitig separat davon 50 g einer 3,12 %igen Wasserstoffperoxidlösung innerhalb von 1,75 Stunden zuzufügen. Während dieser Zeit und noch 60 Minuten nach dem Ende der Monomerdosierung wird die Innentemperatur des Kolbens auf 85°C gehalten. Man erhält eine Dispersion mit einem Feststoffgehalt von 39,5 % und einem LD-Wert von 85 (Teilchendurchmesser ohne Stärkehülle 132 nm).

Tabelle 1

Oberflächenleimung mit den Leimungsmitteln, die nach den Beispielen 1 und 2 hergestellt werden, anhand der Prüfpapier A und B

| Beispiel | Prüfpapier A Cobb-Wert | Prüfpapier B Cobb-Wert |
|---|---|---|
| 1 | 21 | 20 |
| 2 | 24 | 19 |

Mit kationischer Stärke hergestellte Dispersionen sind vorzugsweise als Masseleimungsmittel für Papier verwendbar. Das Leimungsmittel wird vor der Blattbildung zugegeben. Es wurden zwei verschiedene Papiersorten getestet. Die Ausgangsstoffe für die Herstellung der Papiere C und D hatten folgende Zusammensetzung:

Papier C: 100 % Sulfitzellstoff, 30 % $CaCO_3$, 0,3 %, bezogen auf trockenes Papier, eines Copolymerisats aus Acrylamid und Acrylsäure; 12 % Asche (als $CaCO_3$).

Papier D: 100 % gebleichter Fichtensulfitzellstoff, 35° SR
30 % China Clay X1
0,25 % Polyethylenimin
2 % Alaun
pH = 5,0

Tabelle 5

Verwendung der Dispersionen nach den Beispielen 3 bis 6 als Masseleimungsmittel für Papier

| Beispiel | Konz. % | Papier C Cobb-Wert | Papier D Cobb-Wert |
|---|---|---|---|
| 3 | 0,75 | 43 | 47 |
|   | 1,5 | 31 | 25 |
| 4 | 0,75 | 33 | 46 |
|   | 1,5 | 26 | 25 |
| 5 | 0,7 | 41 | 49 |
|   | 1,5 | 22 | 25 |
| 6 | 0,75 | 30 | 40 |
|   | 1,5 | 20 | 25 |

Vergleichsbeispiel 1

Nach den Angaben in Beispiel 3 der US-A- 3 061 471 wurden 45,7 g Stärke I in 422 g Wasser bei 85°C aufgeschlossen. Nach Zusatz von 0,16 g Calciumacetat fügte man 2,3 g einer 1 %igen Enzymlösung (α-Amylase A) zu. Nach 30 min. betrug $\eta_i$ = 0,28 dl/g. Danach gab man dann 1 g Eisessig und 0,05 g Eisen-II-ammoniumsulfatlösung zu und erniedrigte die Temperatur des Reaktionsgemisches auf 50°C. Es wurde dann mit 45,2 g Ethylacrylat, 0,2 g Ascorbinsäure und 0,67 g 30 %igem Wasserstoffperoxid versetzt. Die Temperatur des Reaktionsgemisches stieg schnell auf 75°C an und wurde 1,1 Stunden auf diesem Wert gehalten. Die resultierende Dispersion hatte bei einem Feststoffgehalt von 16,6 % einen LD-Wert von 99.

Die so hergestellt Dispersion wurde auf einen Feststoffgehalt von 2,5 g/l verdünnt und in dieser Form dann zum Leimen der oben beschriebenen Prüfpapiere A und B verwendet. Das Prüfpapier A hatte einen Cobb-Wert von 81, während das Prüfpapier B einen Cobb-Wert von 86 hatte.

Vergleichsbeispiel 2

Entsprechend dem Beispiel 7 der US-A- 3 061 472 wurden 67,5 g Stärke II in 270 ml Wasser aufgeschlossen und die wäßrige Lösung mit 487 g Wasser verdünnt und auf eine Temperatur von 50°C gebracht ($\eta_i$ = 0,28 dl/g). Man gab 1 ml Eisessig, 0,3 g Eisen-II-ammoniumsulfat, 6,6 g eines handelsüblichen Emulgators (Alkylphenoxyether von Polyoxyethylen mit 10 Oxyethylengruppen im Mittel), 67,5 g tert.-Butylacrylat und 1,5 g 30 %iges Wasserstoffperoxid zu. Man polymerisierte bei einer Temperatur von 60°C. Nach 2 Stunden wurde das Reaktionsgemisch abgekühlt. Man erhielt eine Dispersion mit einem Feststoffgehalt von 15,1 %, die einen LD-Wert von 85 % hatte. Der Teilchendurchmesser der Polymerteilchen betrug 177 nm. Die oben angegebenen Prüfpapiere A und B wurden jeweils mit einer 2,5 g/l Feststoffe enthaltenden Dispersion geleimt. Der Cobb-Wert für das Prüfpapier A betrug 76, für das Prüfpapier B 89.

Vergleichsbeispiel 3

Entsprechend dem Beispiel 3 der US-A- 4 301 017 wurden in einem Polymerisationsgefäß 182 g einer 82 %igen Stärke IV in 260 g Wasser suspendiert und durch Erhitzen auf 85°C aufgeschlossen. Die Stärkelösung wurde dann mit 0,1 g eines handelsüblichen Enzyms (α-Amylase Termamyl 60 L) bis zu einem $\eta_i$-Wert von 0,24 dl/g abgebaut. Dann fügte man 5 g Eisessig und anschließend 5 g 30 %iges Wasserstoffperoxid zu. Man gab 20 g einer Monomermischung aus 54 g Styrol und 6 g Acrylnitril zu und wartete zunächst, bis die Polymerisation ansprang und fügte dann erst den Rest der Monomermischung zu. Die Polymerisation wurde bei 90°C durchgeführt. Sie war nach 2,5 Stunden beendet. Die Dispersion hatte einen Feststoffgehalt von 41,6 %, einen LD-Wert von 57.

Die Dispersion wurde auf einen Feststoffgehalt von 2,5 g/l verdünnt und zum Leimen der Prüfpapier A und B verwendet. Bei beiden Papieren betrug der Cobb-Wert nach der Leimung mehr als 150.

Vergleichsbeispiel 4

Analog dem Beispiel 6 der EP-A- 134 449 wurden 8 g Dextrin in 55 g Wasser bei 70°C gelöst. Durch Zugabe von Eisessig wurde ein pH-Wert von 2,8 eingestellt und 1,1 g 80 %iges tert.-Butylhydroperoxid zugegeben. Man dosierte dann eine Mischung von 40 g Styrol und 60 g n-Butylacrylat und gleichzeitig eine Lösung von 0,6 g Natriumformaldehydsulfoxylat und 0,6 g Natriumsulfit in 50 g Wasser innerhalb von 2 Stunden zu. Nach beendeter Zugabe wurde das Reaktionsgemisch noch 1 Stunde bei einer Temperatur von 70°C nachpolymerisiert. Man erhielt eine Dispersion mit einem Feststoffgehalt von 51,6 % und einem LD-Wert von 56 %. Der mittlere Teilchendurchmesser der dispergierten Polymerteilchen betrug 179 nm.

Die so erhaltene Polymerdispersion wurde auf einen Feststoffgehalt von 2,5 g/l verdünnt und zum Leimen der Prüfpapiere A und B verwendet. Bei der Prüfung des Cobb-Wertes der geleimten Prüfpapiere fand man für das Prüfpapier A einen Cobb-Wert von 80 und für das Prüfpapier B einen Wert von 85.

Vergleichsbeispiel 5

Gemäß Beispiel 1 der JP-A- 58/115 196 wird in einem mit einem Rührer und einem Rückflußkühler versehenen 2 1-Kolben 18,5 g Stärke II in 400 ml Wasser suspendiert und 40 min. auf 90°C erwärmt. Nach dem Abkühlen der aufgeschlossenen Stärke auf 30°C gab man eine Mischung aus 58 g Styrol und 43,5 g n-Butylacrylat und als Initiator eine Lösung aus 1 g Kaliumperoxiddisulfat in 50 ml Wasser zu. Das Reaktionsgemisch wurde unter Rühren auf 80°C erhitzt und 3 Stunden bei dieser Temperatur gehalten. Danach wurde es noch weitere 3 Stunden bei 90°C auspolymerisiert und anschließend abgekühlt. Man erhielt eine Dispersion mit einem Feststoffgehalt von 20,6 % und einem LD-Wert von 84. Der Teilchendurchmesser der Polymerteilchen betrug 101 nm.

Die so erhaltene Dispersion wurde auf einen Feststoffgehalt von 2,5 g/l verdünnt und als Leimungsmittel für die oben angegebenen Prüfpapiere A und B verwendet. Der Cobb-Wert des geleimten Prüfpapiers A betrug 58, der des geleimten Prüfpapiers B 29.

Vergleichsbeispiel 6

Wie im Vergleichsbeispiel 5 angegeben, wurden 18,5 g Stärke II in 400 ml Wasser suspendiert und bei 90°C aufgeschlossen. Die Mischung wurde dann auf 85°C abgekühlt, mit 0,5 g 10 %iger Calciumacetatlösung und 1 g einer 1 %igen $\alpha$-Amylase A versetzt. Nach einem 20 minütigem enzymatischen Abbau bei 85°C wurde das Enzym durch Zusatz von 4 ml Eisessig inaktiviert. Die Stärke hat dann einen $\eta_i$-Wert von 0,21 dl/g. Das Reaktionsgemisch wurde dann auf 30°C abgekühlt und mit einer Mischung von 46 g Acrylnitril, 40,5 g n-Butylacrylat und 15 g tert.-Butylacrylat versetzt und außerdem eine Initiatorlösung aus 1 g Kaliumperoxiddisulfat in 50 ml Wasser zugegeben. Die Mischung wurde gerührt, auf 80°C erhitzt und 3 Stunden bei dieser Temperatur gehalten. Die Nachpolymerisation erfolgte innerhalb von 3 Stunden bei 90°C. Die Mischung wurde dann abgekühlt. Man erhielt eine Dispersion mit einem Feststoffgehalt von 20,4 % und einem LD-Wert von 44. Der Teilchendurchmesser der dispergierten Polymerteilchen betrug 278 nm.

Die so erhaltene Polymerdispersion wurde auf einen Feststoffgehalt von 2,5 g/l verdünnt und zur Leimung der oben angegebenen Prüfpapiere A und B verwendet. Das Prüfpapier A hatte danach einen Cobb-Wert von 95, das Prüfpapier B einen Cobb-Wert von 90.

**Patentansprüche**

1. Leimungsmittel für Papier auf Basis feinteiliger, wäßriger Dispersionen von Copolymerisaten, die durch Copolymerisieren von ethylenisch ungesättigten Monomeren nach Art einer Emulsionspolymerisation in Gegenwart von Stärke erhältlich sind, dadurch gekennzeichnet, daß man 40 bis 140 Gewichtsteile einer Monomermischung aus

   (a) 20 bis 65 Gew.% Acrylnitril und/oder Methacrylnitril,
   (b) 80 bis 35 Gew.% eines Acrylsäureesters eines einwertigen, gesättigten $C_3$- bis $C_8$-Alkohols und
   (c) 0 bis 10 Gew.% anderen ethylenisch ungesättigten copolymerisierbaren Monomeren,

   wobei die Summe der Gewichtsprozente (a), (b) und (c) immer 100 beträgt, in 100 Gewichtsteilen einer wäßrigen Lösung, die 2,7 bis 15 Gew.% einer abgebauten Stärke mit einer Viskosität $\eta_i$ = 0,04 bis weniger als 0,12 dl/g gelöst enthält, bei Temperaturen von 40 bis 100°C in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmit-

EP 0 276 770 B2

tel und zusätzlich einer geringen Menge eines Schwermetalisalzes als Initiator copolymerisiert.

2. Leimungsmittel nach Anspruch 1, dadurch gekennzeichnet, daß man eine Monomerenmischung aus
   (a) Acrylnitril und
   (b) mindestens einem Butylacrylat copolymerisiert.

3. Leimungsmittel nach Anspruch 1, dadurch gekennzeichnet, daß der Feststoffgehalt der fertigen Dispersion 38 bis 60 Gew.% beträgt.

4. Leimungsmittel nach Anspruch 1, dadurch gekennzeichnet, daß modifizierte Stärken eingesetzt werden, die vor der Polymerisation zunächst durch enzymatischen und dann durch oxidativen Molgewichtsabbau auf eine Viskosität $\eta_i$ in dem Bereich von 0,045 bis 0,11 dl/g gebracht werden.

5. Leimungsmitel nach Anspruch 1, dadurch gekennzeichnet, daß man eine Monomerenmischung copolymerisiert, die als Monomer (c) Di-$C_1$-bis $C_3$-Alkylamino-$C_2$- bis $C_6$-alkyl(meth)acrylat, N-Vinylimidazolin und/oder N-Vinyl-2-methylimidazolin oder deren Quaternisierungsprodukte enthält.

6. Leimungsmittel nach den Ansprüchen 1 und 2, dadurch gekennzeichnet, daß man eine Monomerenmischung copolymerisiert, die als Monomer (c) Styrol, Acrylamid, Methacrylamid, Methacrylsäureester und/oder Acrylsäureester, die von den Acrylestern (b) verschieden sind, enthält.

7. Verwendung feinteiliger, wäßriger Dispersionen von Copolymerisaten, die durch Copolymerisieren von 40 bis 140 Gewichtsteilen einer Monomermischung aus
   (a) 20 bis 65 Gew.% Acrylnitril und/oder Methacrylnitril,
   (b) 35 bis 80 Gew.% eines Acrylesters eines einwertigen, gesättigten $C_3$- bis $C_8$-Alkohols und
   (c) 0 bis 10 Gew.% anderen ethylenisch ungesättigten copolymerisierbaren Monomeren,
   wobei die Summe der Gewichtsprozente (a), (b) und (c) immer 100 beträgt, in 100 Gewichtsteilen einer wäßrigen Lösung, die 2,7 bis 15 Gew.% einer abgebauten Stärke mit einer Viskosität $\eta_i = 0,04$ bis weniger als 0,12 dl/g gelöst enthält, bei Temperaturen von 40 bis 100°C in Gegenwart von Wasserstoffperoxid, Kombinationen von Wasserstoffperoxid mit einem Schwermetallsalz, Redoxsystemen aus Wasserstoffperoxid mit einem Reduktionsmittel oder Redoxsystemen aus Wasserstoffperoxid, einem Reduktionsmittel und zusätzlich einer geringen Menge eines Schwermetallsalzes als Initiator erhältlich sind, als Leimungsmittel für Papier.

## Claims

1. A sizing agent for paper based on a finely divided, aqueous dispersion of a copolymer obtainable by copolymerizing an ethylenically unsaturated monomer in the manner of an emulsion polymerization in the presence of starch, which comprises copolymerizing from 40 to 140 parts by weight of a monomer mixture of
   (a) from 20 to 65% by weight of acrylonitrile and/or methacrylonitrile,
   (b) from 80 to 35% by weight of an acrylate of a monohydric saturated $C_3$-$C_8$-alcohol and
   (c) from 0 to 10% by weight of other ethylenically unsaturated copolymerizable monomers,
   the weight percentages (a), (b) and (c) always adding up to 100,
   in 100 parts by weight of an aqueous solution containing in solution from 2.7 to 15% by weight of a degraded starch having a viscosity $\eta_i$ from 0.04 to less than 0.12 dl/g at from 40 to 100°C in the presence of an initiator comprising hydrogen peroxide, combinations of hydrogen peroxide with a heavy metal salt, redox systems consisting of hydrogen peroxide with a reducing agent or redox systems consisting of hydrogen peroxide, a reducing agent and additionally a small amount of a heavy metal salt.

2. A sizing agent as claimed in claim 1, wherein a monomer mixture of
   (a) acrylonitrile and
   (b) one or more butyl acrylates
   is copolymerized.

3. A sizing agent as claimed in claim 1, wherein the solids content of the ready-prepared dispersion ranges from 38 to 60% by weight.

4. A sizing agent as claimed in claim 1, wherein the starch used comprises a modified starch which, before the polymerization, is first brought to a viscosity $\eta_i$ within the range from 0.045 to 0.11 dl/g by enzymatic and then by oxidative molecular weight degradation.

5. A sizing agent as claimed in claim 1, wherein the monomer mixture copolymerized contains as monomer (c) a di-$C_1$-$C_3$-alkylamino-$C_2$-$C_6$-alkyl (meth)acrylate, N-vinyl-imidazoline and/or N-vinyl-2-methylimidazoline or a quaternization product thereof.

6. A sizing agent as claimed in claims 1 and 2, wherein the monomer mixture copolymerized contains as monomer (c) styrene, acrylamide, methacrylamide, methacrylates and/or acrylates different from acrylates (b).

7. The use of a finely divided aqueous dispersion of a copolymer obtainable by copolymerizing from 40 to 140 parts by weight of a monomer mixture of
   (a) from 20 to 65% by weight of acrylonitrile and/or methacrylonitrile,
   (b) from 35 to 80% by weight of an acrylate of a monohydric saturated $C_3$-$C_8$-alcohol and
   (c) from 0 to 10% by weight of other ethylenically unsaturated copolymerizable monomers,
   the weight percentages (a), (b) and (c) always adding up to 100,
   in 100 parts by weight of an aqueous solution containing in solution from 2.7 to 15% by weight of a degraded starch having a viscosity $\eta_i$ from 0.04 to less than 0.12 dl/g at from 40 to 100°C in the presence of an initiator comprising hydrogen peroxide, combinations of hydrogen peroxide with a heavy metal salt, redox systems consisting of hydrogen peroxide with a reducing agent or redox systems consisting of hydrogen peroxide, a reducing agent and additionally a small amount of a heavy metal salt, as a sizing agent for paper.

**Revendications**

1. Agents ou compositions d'encollage du papier, à base de dispersions aqueuses de copolymères, finement divisées, que l'on peut obtenir par la copolymérisation de monomères à insaturation éthylénique, à la manière d'une polymérisation en émulsion, en présence d'amidon, qui se caractérisent en ce que l'on copolymérise 40 à 140 parties en poids d'un mélange de monomères constitué de
   (a) 20 à 65% en poids d'acrylonitrile et/ou de méthacrylonitrile,
   (b) 80 à 35% en poids d'un ester de l'acide acrylique d'un alcool en $C_3$ à $C_8$ monohydroxylé, saturé et
   (c) 0 à 10% en poids d'autres monomères à insaturation éthylénique, copolymérisables,
   où la somme des pourcentages pondéraux de (a), (b) et (c) atteint toujours 100, dans 100 parties en poids d'une solution aqueuse qui contient en solution 2,7 à 15% en poids d'un amidon dégradé, d'une viscosité $\eta_i$ de 0,04 à moins de 0,12 dl/g, à des températures de 40 à 100°C, en présence de peroxyde d'hydrogène, de combinaisons du peroxyde d'hydrogène et d'un sel d'un métal lourd, de système redox formés de peroxyde d'hydrogène et d'un agent réducteur, ou de système redox formés de peroxyde d'hydrogène, d'un agent réducteur et, complémentairement, d'une faible proportion d'un sel de métal lourd à titre d'amorceur.

2. Agent ou composition d'encollage selon la revendication 1, qui se caractérise en ce que l'on copolymérise un mélange de monomères constitué de
   (a) l'acrylonitrile et
   (b) au moins un acrylate de butyle.

3. Agent ou composition d'encollage suivant la revendication 1, qui se caractérise en ce que la teneur en substances solides de la dispersion prête fluctue de 38 à 60% en poids.

4. Agent ou composition d'encollage selon la revendication 1, qui se caractérise en ce que l'on utilise des amidons modifiés que l'on amène, préalablement à la polymérisation, par diminution du poids moléculaire d'abord par voie enzymatique et ensuite par voie oxydante, à une viscosité êta$_i$ qui fluctue de 0,045 à 0,11 dl/g.

5. Agent ou composition d'encollage suivant la revendication 1, qui se caractérise en ce que l'on copolymérise un mélange de monomères, qui contient, à titre de monomère (c), du (méth)acrylate de di-alkyl($C_1$ à $C_3$)amino-alkyle ($C_2$ à $C_6$), de la N-vinylimidazoline et/ou de la N-vinyl-2-méthylimidazoline, ou leurs produits de quaternisation.

6. Agent ou composition d'encollage suivant les revendications 1 et 2, qui se caractérise en ce que l'on copolymérise un mélange de monomères, qui contient, à titre de monomère (c), du styrène, de l'acrylamide, du méthacrylamide, un ester de l'acide méthacrylique et/ou un ester de l'acide acrylique, qui diffèrent des esters acryliques (b).

7. Utilisation, à titre d'agent ou de composition d'encollage du papier, à base de dispersions aqueuses de copolymères, finement divisées, que l'on peut obtenir par la copolymérisation de monomères à insaturation éthylénique, à la manière d'une polymérisation en émulsion, en présence d'amidon, qui se caractérisent en ce que l'on copolymérise 40 à 140 parties en poids d'un mélange de monomères constitué de
(a) 20 à 65% en poids d'acrylonitrile et/ou de méthacrylonitrile,
(b) 80 à 35% en poids d'un ester de l'acide acrylique d'un alcool en $C_3$ à $C_8$ monohydroxylé, saturé et
(c) 0 à 10% en poids d'autres monomères à insaturation éthylénique, copolymérisables,
où la somme des pourcentages pondéraux de (a), (b) et (c) atteint toujours 100, dans 100 parties en poids d'une solution aqueuse qui contient en solution 2,7 à 15% en poids d'un amidon dégradé, d'une viscosité $\eta_i$ de 0,04 à moins de 0,12 dl/g, à des températures de 40 à 100°C, en présence de peroxyde d'hydrogène, de combinaisons du peroxyde d'hydrogène et d'un sel d'un métal lourd, de système redox formés de peroxyde d'hydrogène et d'un agent réducteur, ou de système redox formés de peroxyde d'hydrogène, d'un agent réducteur et, complémentairement, d'une faible proportion d'un sel de métal lourd à titre d'amorceur.